(19) Europäisches Patentamt
European Patent Office
Office européen des brevets

(11) **EP 4 332 845 A1**

(12) **EUROPEAN PATENT APPLICATION**
published in accordance with Art. 153(4) EPC

(43) Date of publication:
**06.03.2024 Bulletin 2024/10**

(21) Application number: **21939182.8**

(22) Date of filing: **26.04.2021**

(51) International Patent Classification (IPC):
*G06N 20/00* [(2019.01)]

(52) Cooperative Patent Classification (CPC):
**G06N 20/00**

(86) International application number:
**PCT/JP2021/016630**

(87) International publication number:
**WO 2022/230019 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventor: **ETO Riki**
**Tokyo 108-8001 (JP)**

(74) Representative: **Betten & Resch**
**Patent- und Rechtsanwälte PartGmbB**
**Maximiliansplatz 14**
**80333 München (DE)**

(54) **LEARNING DEVICE, LEARNING METHOD, AND LEARNING PROGRAM**

(57) The function input means 91 accepts input of a reward function whose feature is set to satisfy Lipschitz continuity condition. The estimation means 92 estimates a trajectory that minimizes Wasserstein distance, which represents distance between a probability distribution of a trajectory of an expert and a probability distribution of a trajectory determined based on a parameter of the reward function. The updating means 93 updates, based on the estimated trajectory, the parameter of the reward function to maximize the log-likelihood of Boltzmann distribution derived from a principle of a maximum entropy.

# FIG. 4

EP 4 332 845 A1

**Description**

**Technical Field**

This invention relates to a learning device, a learning method, and a learning program that performs inverse reinforcement learning.

**Background Art**

Reinforcement Learning (RL) is known as one of the machine learning methods. Reinforcement learning is a method to learn an action that maximizes value through trial and error of various actions. In reinforcement learning, a reward function is set to evaluate this value, and the action that maximizes this reward function is explored. However, setting the reward function is generally difficult.

Inverse reinforcement learning (IRL) is known as a method to facilitate the setting of this reward function. In inverse reinforcement learning, the decision-making history data of an expert is used to generate a reward function that reflects the intention of the expert by repeating optimization using the reward function and updating the parameters of the reward function.

Non patent literature 1 describes Maximum Entropy Inverse Reinforcement Learning (ME-IRL), which is a type of inverse reinforcement learning. In ME-IRL, the maximum entropy principle is used to specify the distribution of trajectories and learn the reward function by approaching the true distribution (i.e., maximum likelihood estimation). This solves the indefiniteness of the existence of multiple reward functions that reproduce the trajectory (action history) of an expert.

Non patent literature 2 also describes Guided Cost Learning (GCL), a method of inverse reinforcement learning that improves on maximum entropy inverse reinforcement learning. The method described in Non patent literature 2 uses weighted sampling to update the weights of the reward function.

**Citation List**

**Non patent Literature**

NPL 1: B. D. Ziebart, A. Maas, J. A. Bagnell, and A. K. Dey, "Maximum entropy inverse reinforcement learning," In AAAI, AAAI '08, 2008.
NPL 2: Chelsea Finn, Sergey Levine, Pieter Abbeel, "Guided Cost Learning: Deep Inverse Optimal Control via Policy Optimization", Proceedings of The 33rd International Conference on Machine Learning, PMLR 48, pp. 49-58, 2016.

**Summary of Invention**

**Technical Problem**

On the other hand, in the ME-IRL described in Non patent literature 1, it is necessary to calculate the sum of rewards for all possible trajectories during training. However, in reality, it is difficult to calculate the sum of rewards for all trajectories.

To address this issue, the GCL described in Non patent literature 2 calculates this value approximately by weighted sampling. Here, when using weighted sampling with GCL, it is necessary to assume the distribution of the sampling itself. However, there are some problems, such as combinatorial optimization problems, where it is not known how to set the sampling distribution, so the method described in Non patent literature 2 is not applicable to various mathematical optimization.

Therefore, it is an exemplary object of the present invention to provide a learning device, a learning method, and a learning program that can perform inverse reinforcement learning applicable to a mathematical optimization problem such as combinatorial optimization, while solving a problem of indefiniteness in inverse reinforcement learning.

**Solution to Problem**

A learning device according to the present invention includes: a function input means which accepts input of a reward function whose feature is set to satisfy Lipschitz continuity condition; an estimation means which estimates a trajectory that minimizes Wasserstein distance, which represents distance between a probability distribution of a trajectory of an expert and a probability distribution of a trajectory determined based on a parameter of the reward function; and an updating means which updates, based on the estimated trajectory, the parameter of the reward function to maximize the log-likelihood of Boltzmann distribution derived from a principle of a maximum entropy, wherein the updating means derives, as a lower limit of the log-likelihood, an expression for subtracting, from the Wasserstein distance, an entropy regularization term defined by an expression for the maximum reward value for the parameter minus the average value of reward for the parameter, and updates the parameter of the reward function to maximize the derived lower limit of the log-likelihood.

A earning method according to the present invention includes: accepting input of a reward function whose feature is set to satisfy Lipschitz continuity condition; estimating a trajectory that minimizes Wasserstein distance, which represents distance between a probability distribution of a trajectory of an expert and a probability distribution of a trajectory determined based on a parameter of the reward function; and updating, based on the estimated trajectory, the parameter of the reward function to maximize the log-likelihood of Boltzmann distribution derived from a principle of a maximum entropy, wherein, when updating the parameter, the computer derives, as a lower limit of the log-likelihood, an expression for subtracting, from the Wasserstein distance, an entropy regularization term defined by an expression for the maximum reward value for the parameter minus the average value of reward for the parameter, and updates the parameter of the reward function to maximize the derived lower limit of the log-likelihood.

A learning program according to the present invention causes a computer to execute: function input processing to accept input of a reward function whose feature is set to satisfy Lipschitz continuity condition; estimation input processing to estimate a trajectory that minimizes Wasserstein distance, which represents distance between a probability distribution of a trajectory of an expert and a probability distribution of a trajectory determined based on a parameter of the reward function; and updating processing to update, based on the estimated trajectory, the parameter of the reward function to maximize the log-likelihood of Boltzmann distribution derived from a principle of a maximum entropy, wherein in the updating processing, as a lower limit of the log-likelihood, an expression for subtracting, from the Wasserstein distance, an entropy regularization term defined by an expression for the maximum reward value for the parameter minus the average value of reward for the parameter is derived, and the parameter of the reward function to maximize the derived lower limit of the log-likelihood is updated.

**Advantageous Effects of Invention**

The present invention is capable of performing inverse reinforcement learning applicable to a mathematical optimization problem such as combinatorial optimization, while solving a problem of indefiniteness in inverse reinforcement learning.

**Brief Description of Drawings**

[FIG. 1] It depicts a block diagram illustrating a configuration example of one embodiment of a learning device according to the present disclosure.

[FIG. 2] It depicts a flowchart illustrating an operation example of the learning device.

[FIG. 3] It depicts a block diagram illustrating a configuration example of one embodiment of a robot control system.

[FIG. 4] It depicts a block diagram illustrating the outline of a learning device according to the present disclosure.

[FIG. 5] It depicts a schematic block diagram illustrating a configuration of a computer according to at least one of exemplary embodiments.

**Description of Embodiments**

For ease of understanding, the problem setting, methodology, and issues of maximum entropy inverse reinforcement learning, which is assumed in this exemplary embodiment, is described. In ME-IRL, the following problem setting is assumed. That is, the setting is to estimate only one reward function $R(s, a) = \theta \cdot f(s, a)$ from expert's data $D = \{\tau_1, \tau_2, ..., \tau_N\}$ (where $\tau_i = ((si, a_1), (s_2, a_2), ..., (s_N, a_N))$. In ME -IRL, estimating $\theta$ can reproduce the decision-making of an expert.

Next, the ME-IRL methodology is described. In ME-IRL, a trajectory $\tau$ is represented by Equation 1, illustrated below, and a probability model representing distribution of trajectories $p_\theta(\tau)$ is represented by Equation 2, illustrated below. $\theta^T f_\tau$ in Equation 2 represents the reward function (see Equation 3). Also, Z represents the sum of rewards for all trajectories (see Equation 4).

[Math. 1]

$$\tau = \{(s_t, a_t) | t = 0, \cdots, T\} \quad \text{(Equation 1)}$$

$$p_\theta(\tau) := \frac{1}{Z} \exp(\theta^\top f_\tau) \quad \text{(Equation 2)}$$

where

$$f_\tau := \sum_{t=0}^{T} \gamma^t f_{s_t, a_t} \quad \text{(Equation 3)}$$

$$Z := \sum_\tau \exp(\theta^\top f_\tau) \quad \text{(Equation 4)}$$

The update law of the reward function weights by maximum likelihood estimation (specifically, the gradient ascent method) is then represented by Equations 5 and 6, which are illustrated below. In Equation 5, $\alpha$ is step width, and $L(\theta)$ is distance measure between distributions used in ME-IRL.

[Math. 2]

$$\theta \leftarrow \theta + \alpha \nabla_\theta \mathcal{L}(\theta) \quad \text{(Equation 5)}$$

$$\mathcal{L}(\theta) := \frac{1}{N} \sum_{n=1}^{N} \log p_\theta(\tau) = \frac{1}{N} \sum_{n=1}^{N} (\theta^\top f_{\tau^{(n)}})) - \log \sum_\tau \exp(\theta^\top f_\tau) \quad \text{(Equation 6)}$$

The second term in Equation 6 is the sum of rewards for all trajectories. ME-IRL assumes that the value of this second term can be calculated exactly. However, in reality, it is difficult to calculate the sum of rewards for all trajectories. The above is the problem setting, methodology, and issues of ME-IRL.

The exemplary embodiment will be described below with reference to the drawings.

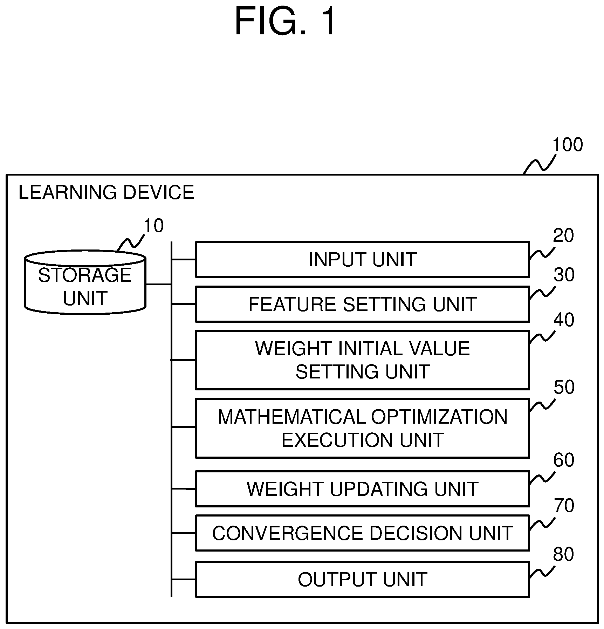

FIG. 1 is a block diagram illustrating a configuration example of one embodiment of a learning device according to the present disclosure. The learning device 100 of this exemplary embodiment is a device that performs inverse reinforcement learning to estimate a reward function from the behavior of a subject (expert) through machine learning, and specifically performs information processing based on the behavioral characteristics of the expert. The learning device 100 includes a storage unit 10, an input unit 20, a feature setting unit 30, a weight initial value setting unit 40, a mathematical optimization execution unit 50, a weight updating unit 60, a convergence decision unit 70, and an output unit 80.

Since the mathematical optimization execution unit 50, the weight updating unit 60, and the convergence decision unit 70 perform the inverse reinforcement learning described below, the device including the mathematical optimization execution unit 50, the weight updating unit 60, and the convergence decision unit 70 can be called an inverse reinforcement learning device.

The storage unit 10 stores information necessary for the learning device 100 to perform various processes. The storage unit 10 may store decision-making history data (trajectory) of an expert that is accepted by the input unit 20 described below. The storage unit 10 may also store candidate features of the reward function to be used for learning by the mathematical optimization execution unit 50 and the weight updating unit 60, which will be described later. However, the candidate feature need not necessarily be the feature used for the objective function.

The storage unit 10 may also store a mathematical optimization solver to realize the mathematical optimization execution unit 50 described below. The content of the mathematical optimization solver is arbitrary and may be determined according to the environment or device in which it is to be executed.

The input unit 20 accepts input of information necessary for the learning device 100 to perform various processes. For example, the input unit 20 may accept input of the decision-making history data of an expert (specifically, state and action pairs) described above. The input unit 20 may also accept input of initial states and constraints used by the inverse reinforcement learning device to perform inverse reinforcement learning, as described below.

The feature setting unit 30 sets features of the reward function from data including state and action. Specifically, in order for inverse reinforcement learning device described below to be able to use Wasserstein distance as a distance measure between distributions, the feature setting unit 30 sets the features of the reward function so that the gradient of the tangent line is finite for the entire function. The feature setting unit 30 may, for example, set the features of the reward function to satisfy the Lipschitz continuity condition.

For example, let $f_\tau$ be a feature vector of trajectory $\tau$. In the linear case of the reward function $\theta^T f_\tau$, if the mapping F: $\tau \to f_\tau$ is Lipschitz continuous, then $\theta^T f_\tau$ is also Lipschitz continuous. Therefore, the feature setting unit 30 may set the features so that the reward function is a linear function.

For example, Equation 7, illustrated below, is an inappropriate reward function for this disclosure because the gradient becomes infinite at $a_0$.

[Math. 3]

$$f_\tau = \begin{cases} 1 & (a_0 \geq 0) \\ 0 & (otherwise) \end{cases} \quad \text{(Equation 7)}$$

The feature setting unit 30 may, for example, determine the reward function with features set according to user instructions, or may retrieve a reward function that satisfies the Lipschitz continuity condition from the storage unit 10.

The weight initial value setting unit 40 initializes the weights of the reward function. Specifically, the weight initial value setting unit 40 sets the weights of individual features included in the reward function. The method of initializing the weights is not particularly limited, and the weights may be initialized based on any predetermined method according to the user or other factors.

The mathematical optimization execution unit 50 derives a trajectory $\tau^\wedge$ (where $\tau^\wedge$ is the superscript $\wedge$ of $\tau$) that minimizes distance between the probability distribution of the expert's trajectory (action history) and the probability distribution of the trajectory determined based on the optimized (reward function) parameters. Specifically, the mathematical optimization execution unit 50 estimates the expert's trajectory $\tau^\wedge$ by using the Wasserstein distance as the distance measure between the distributions and executing mathematical optimization to minimize the Wasserstein distance.

The Wasserstein distance is defined by Equation 8, illustrated below. In other words, the Wasserstein distance represents the distance between the probability distribution of the expert's trajectories and the probability distribution of trajectories determined based on the parameters of the reward function. Note that due to the constraint of the Wasserstein distance, the reward function $\theta^T f_\tau$ must be a function that satisfies the Lipschitz continuity condition. On the other hand, in this exemplary embodiment, since the features of the reward function are set to satisfy the Lipschitz continuity condition by the feature setting unit 30, the mathematical optimization execution unit 50 is able to use the Wasserstein distance as illustrated below.

[Math. 4]

$$W(\theta) := \frac{1}{N} \sum_{n=1}^{N} (\theta^\top f_{\tau^{(n)}}) - \frac{1}{N} \sum_{n=1}^{N} (\theta^\top f_{\tau_\theta^{(n)}}) \quad \text{(Equation 8)}$$

The Wasserstein distance defined in Equation 8, illustrated above, takes values less than or equal to zero, and increasing this value corresponds to bringing the distributions closer together. In the second term of Equation 8, $\tau_{\theta(n)}$ represents the n-th trajectory optimized by the parameter $\theta$. The second term in Equation 8 is a term that can also be calculated in a combinatorial optimization problem. Therefore, by using the Wasserstein distance illustrated in Equation 8 as a distance measure between distributions, inverse reinforcement learning applicable to mathematical optimization problems such as the combinatorial optimization problems can be performed.

The weight updating unit 60 updates the parameter $\theta$ of the reward function to maximize the distance measure between distributions based on the estimated expert's trajectory $\tau^\wedge$. Here, in maximum entropy inverse reinforcement learning (i.e., ME-IRL), the trajectory $\tau$ is assumed to follow a Boltzmann distribution by the maximum entropy principle. Therefore, as in ME-IRL, the weight updating unit 60 updates the parameter $\theta$ of the reward function to maximize the log-likelihood of the Boltzmann distribution derived by the maximum entropy principle based on the estimated expert's trajectory $\tau^\wedge$ as illustrated in Equations 5 and 6 above.

In updating, the weight updater 60 in this exemplary embodiment derives the upper limit of the log sum exponential (hereinafter referred to as logSumExp) from the second term in Equation 6 (i.e., the sum of the rewards for all trajectories). In other words, the weight updating unit 60 derives the lower limit $\underline{L}(\theta)$ ($\underline{L}$ denotes the subscript underbar of L) in the distance measure between the distributions used in ME-IRL as in Equation 9 below. The derived equation is sometimes hereafter referred to simply as the lower limit of the log-likelihood.

[Math. 5]

$$\mathcal{L}(\theta) = \frac{1}{N} \sum_{n=1}^{N} \theta^\top f_{\tau^{(n)}} - \log \sum_{\tau} \exp(\theta^\top f_\tau)$$

$$\geq \frac{1}{N} \sum_{n=1}^{N} \theta^\top f_{\tau^{(n)}} - \max_n \theta^\top f_{\tau_\theta^{(n)}} - \log N_\tau =: \underline{\mathcal{L}}(\theta) \quad \text{(Equation 9)}$$

The second term in Equation 9, which represents the lower bound of the log-likelihood, is the maximum reward value for the current parameter $\theta$, and the third term is the log value (logarithmic value) of the number of trajectories ($N_\tau$) that can be taken. Thus, based on the log-likelihood of ME-IRL, the weight updating unit 60 derives the lower bound of the log-likelihood, which is calculated by subtracting the maximum reward value for the current parameter $\theta$ and the log value (logarithmic value) of the number of trajectories ($N_\tau$) that can be taken from the probability distribution of trajectories.

In addition, the weight updating unit 60 transforms the equation for the lower bound of the derived ME-IRL log-likelihood into an equation that subtracts the entropy regularization term from the Wasserstein distance. An equation obtained by decomposing the expression for the lower bound of the log-likelihood of ME-IRI, into the Wasserstein distance and the entropy regularization term is expressed as Equation 10 illustrated below.

[Math. 6]

$$\mathcal{L}(\theta) = \left( \frac{1}{N} \sum_{n=1}^{N} \theta^\top f_{\tau^{(n)}} - \frac{1}{N} \sum_{n=1}^{N} \theta^\top f_{\tau_\theta^{(n)}} \right) - \left( \max_n \theta^\top f_{\tau_\theta^{(n)}} - \frac{1}{N} \sum_{n=1}^{N} \theta^\top f_{\tau_\theta^{(n)}} \right) + \text{const.}$$

$$\text{(Equation 10)}$$

The expression in the first parenthesis in Equation 10 represents the Wasserstein distance, as in Equation 8 above. The expression in the second parenthesis in Equation 10 represents the entropy regularization term that contributes to the increase in the log-likelihood of the Boltzmann distribution derived from the maximum entropy principle. Specifically, in the entropy regularization term illustrated in Equation 10 (i.e., the equation in the second parenthesis in Equation 10), the first term represents the maximum reward value for the current parameter $\theta$, and the second term represents the average value of the reward for the current parameter $\theta$.

Why this second term functions as an entropy regularization term is explained. In order to maximize the lower bound of the log-likelihood of the ME-IRL, the value of the second term must be smaller, which corresponds to a smaller difference between the maximum reward value and the average value. A smaller difference between the maximum reward value and the average value indicates a smaller variation in the trajectory.

In other words, a smaller difference between the maximum reward value and the average value means an increase in entropy, which means that entropy regularization works and contributes to entropy maximization. This contributes to maximizing the log-likelihood of the Boltzmann distribution, which in turn contributes to resolving indeterminacy in inverse reinforcement learning.

The weight updating unit 60 updates the parameter $\theta$ using the gradient ascent method, fixing, for example, the estimated trajectory $\tau^\wedge$ based on Equation 10 illustrated above. However, the value may not converge with the usual gradient ascent method. In the entropy regularization term, the feature of the trajectory that takes the maximum reward value ($f_{\tau\theta\,max}$) does not match the average value of the feature of the other trajectories ($f_{\tau\,(n)}$) (i.e., the difference between them is not zero). Therefore, the usual gradient ascent method is not stable because the log-likelihood oscillates and does not converge, making it difficult to make a proper convergence decision (see Equation 11 below).

[Math. 7]

$$\frac{\partial \mathcal{L}}{\partial \theta} = \frac{1}{N} \sum_{n=1}^{N} f_{\tau^{(n)}} - f_{\tau_\theta^{\max}} \neq 0 \qquad \text{(Equation 11)}$$

Therefore, when using the gradient method, the weight updating unit 60 in this exemplary embodiment may update the parameter θ so that the portion contributing to entropy regularization (i.e., the portion corresponding to the entropy regularization term) is gradually attenuated. Specifically, the weight updating unit 60 defines an updating equation in which the portion contributing to entropy regularization has an attenuation factor $\beta_t$ that indicates the degree of attenuation. For example, the weight updating unit 60 differentiates the above Equation 10 by θ and defines Equation 12, illustrated below, in which the attenuation coefficient is set in the portion corresponding to the entropy regularization term among the portion corresponding to the term indicating the Wasserstein distance (i.e., the portion contributing to the process of increasing the Wasserstein distance) and the portion corresponding to the entropy regularization term.
[Math. 8]

$$\frac{\partial \mathcal{L}}{\partial \theta} \approx \left( \frac{1}{N} \sum_{n=1}^{N} f_{T^{(n)}} - \frac{1}{N} \sum_{n=1}^{N} f_{\tau_\theta^{(n)}} \right) - \beta_t \left( f_{\tau_\theta^{\max}} - \frac{1}{N} \sum_{n=1}^{N} f_{\tau_\theta^{(n)}} \right) \quad \text{(Equation 12)}$$

The attenuation coefficients are predefined according to the method of attenuating the portion corresponding to the entropy regularization term. For example, for smooth attenuation, $\beta_t$ is defined as in Equation 13, illustrated below.
[Math. 9]

$$\beta_t = \beta_1 (t - 1)^{-\beta_2} \quad \text{(Equation 13)}$$

In Equation 13, $\beta_1$ is set to 1 and $\beta_2$ is set to 0 or greater. Also, t indicates the number of iterations. This makes the attenuation coefficient $\beta_t$ act as a coefficient that decreases the portion corresponding to the entropy regularization term as the number of iterations t increases.
Since the Wasserstein distance is more weakly phased than the log-likelihood, which is the KL divergence, it is possible to bring the log-likelihood close to 0, thereby also bringing the Wasserstein distance close to 0. Therefore, the weight updating unit 60 may update the parameter θ without attenuating the portion corresponding to the entropy regularization term in the initial stage of the update, and update the parameter θ to reduce the effect of the portion corresponding to the entropy regularization term at the timing when the log-likelihood begins to oscillate.
Specifically, the weight updating unit 60 updates the parameter θ with the attenuation coefficient $\beta_t$ = 1 initially, using Equation 12 illustrated above. The weight updating unit 60 may then update the parameter θ by changing the attenuation coefficient $\beta_t$ = 0 at the timing when the log-likelihood begins to oscillate, thereby eliminating the effect of the portion corresponding to the entropy regularization term.
For example, the weight updating unit 60 may determine that the log-likelihood has begun to oscillate when the moving average of the log-likelihood becomes constant. Specifically, the weight updating unit 60 may determine that the moving average has become constant when the change in the moving average in the time window (several points in the past from the current value) of the "lower bound of log-likelihood" is very small (e.g., less than $1e^{-3}$).
At the timing when the log-likelihood begins to oscillate, the weight updating unit 60 may first change the oscillation coefficient as illustrated above in Equation 13, instead of suddenly setting the attenuation coefficient $\beta_t$ = 0. Then, the weight updating unit 60 may change the attenuation coefficient $\beta_t$ = 0 at the timing when the log-likelihood begins to oscillate further after the change. The method for determining the timing at which the oscillations begin to occur is the same as the method described above.
Furthermore, the weight updating unit 60 may change the updating method of the parameter θ at the timing when the log-likelihood begins to oscillate further after the oscillation coefficient is changed as illustrated in Equation 13 above. Specifically, the weight updating unit 60 may update the parameter θ using the momentum method as illustrated in Equation 14 below. The values of $\gamma_1$ and $\alpha$ in Equation 14 are predetermined. For example, $\gamma_1$ = 0.9 and $\alpha$ = 0.001 may be defined.
[Math. 10]

$$m_t = \gamma_1 m_{t-1} + (1 - \gamma_1) \frac{\partial \mathcal{L}}{\partial \theta}$$
$$\theta_{t+1} = \theta_t + \alpha_t m_t \quad \text{(Equation 14)}$$

Thereafter, the trajectory estimation process by the mathematical optimization execution unit 50 and the updating process of the parameter θ by the weight updating unit 60 are repeated until the lower bound of the log-likelihood is judged to have converged by the convergence decision unit 70 described below.

The convergence decision unit 70 determines whether the distance measure between distributions has converged. Specifically, the convergence decision unit 70 determines whether the lower limit of the log-likelihood has converged. The determination method is arbitrary. For example, the convergence decision unit 70 may determine that the distance measure between distributions has converged when the absolute value of the lower limit of the log-likelihood becomes smaller than a predetermined threshold value.

When the convergence decision unit 70 determines that the distance measures between distributions have not converged, the convergence decision unit 70 continues the processing by the mathematical optimization execution unit 50 and the weight updating unit 60. On the other hand, when the convergence decision unit 70 determines that the distance measures between distributions have converged, the convergence decision unit 70 terminates the processing by the mathematical optimization execution unit 50 and the weight updating unit 60.

The output unit 80 outputs the learned reward function.

The input unit 20, the feature setting unit 30, the weight initial value setting unit 40, the mathematical optimization execution unit 50, the weight updating unit 60, the convergence decision unit 70, and the output unit 80 are realized by a processor (for example, CPU (Central Processing Unit)) of a computer that operates according to a program (learning program).

For example, a program may be stored in a storage unit 10 provided by the learning device 100, and the processor may read the program and operate as the input unit 20, the feature setting unit 30, the weight initial value setting unit 40, the mathematical optimization execution unit 50, the weight updating unit 60, the convergence decision unit 70, and the output unit 80 according to the program. In addition, the functions of the learning device 100 may be provided in the form of SaaS (Software as a Service).

The input unit 20, the feature setting unit 30, the weight initial value setting unit 40, the mathematical optimization execution unit 50, the weight updating unit 60, the convergence decision unit 70, and the output unit 80 may each be realized by dedicated hardware. Some or all of the components of each device may be realized by general-purpose or dedicated circuit, a processor, or combinations thereof. These may be configured by a single chip or by multiple chips connected through a bus. Some or all of the components of each device may be realized by a combination of the above-mentioned circuit, etc., and a program.

When some or all of the components of the learning device 100 are realized by multiple information processing devices, circuits, etc., the multiple information processing devices, circuits, etc. may be centrally located or distributed. For example, the information processing devices, circuits, etc. may be realized as a client-server system, a cloud computing system, etc., each of which is connected through a communication network.

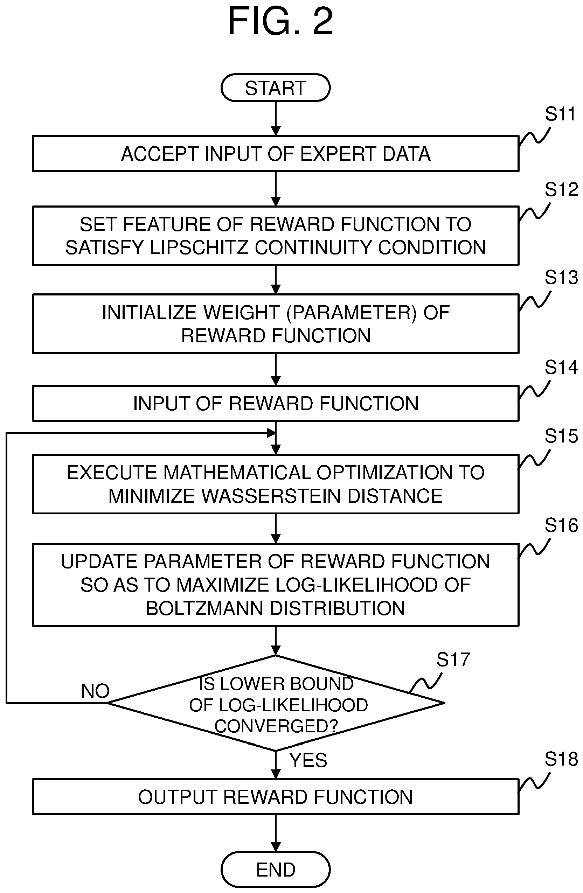

Next, the operation example of this exemplary embodiment of the learning device 100 will be described. FIG. 2 is a flowchart illustrating an operation example of the learning device 100. The input unit 20 accepts input of expert data (i.e., trajectory/decision-making history data of an expert) (step S11). The feature setting unit 30 sets features of a reward function from data including state and action to satisfy Lipschitz continuity condition (step S12). The weight initial value setting unit 40 initializes weights (parameters) of the reward function (step S13).

The mathematical optimization execution unit 50 accepts input of the reward function whose feature is set to satisfy the Lipschitz continuity condition (step S14). Then, the mathematical optimization execution unit 50 executes mathematical optimization to minimize Wasserstein distance (step S15). Specifically, the mathematical optimization execution unit 50 estimates the trajectory that minimizes the Wasserstein distance, which represents the distance between a probability distribution of a trajectory of the expert and a probability distribution of a trajectory determined based on the parameter of the reward function.

The weight updating unit 60 updates the parameter of the reward function so as to maximize the log-likelihood of Boltzmann distribution based on the estimated trajectory (step S16). In this case, the weight updating unit 60 derives a lower bound of the log-likelihood and updates the parameter of the reward function so as to maximize the derived lower bound of the log-likelihood.

The convergence decision unit 70 determines whether the lower bound of the log-likelihood has converged or not (Step S17). If it is determined that the lower bound of the log-likelihood has not converged (No in step S17), the process from step S15 is repeated using the updated trajectory. On the other hand, if it is determined that the lower bound of the log-likelihood has converged (Yes in step S 17), the output unit 80 outputs the learned reward function (step S18).

As described above, in this exemplary embodiment, the mathematical optimization execution unit 50 accepts input of a reward function whose feature is set to satisfy Lipschitz continuity condition and estimates a trajectory that minimizes Wasserstein distance, which represents distance between a probability distribution of a trajectory of an expert and a probability distribution of a trajectory determined based on a parameter of the reward function. Then, the weight updating unit 60 updates the parameter of the reward function to maximize the log-likelihood of Boltzmann distribution based on the estimated trajectory. Specifically, the weight updating unit 60 derives an expression that subtracts the entropy regularization term from the Wasserstein distance as a lower bound of the log-likelihood, and updates the parameter of the reward function so that the derived lower bound of the log-likelihood is maximized. Thus, while solving a problem of indefiniteness in inverse reinforcement learning, inverse reinforcement learning can be applied to mathematical optimization problems such as combinatorial optimization.

For example, the maximum entropy inverse reinforcement learning solves the indefiniteness of the existence of multiple reward functions, but only in situations where all trajectories can be calculated can adequate results be obtained. In contrast, the method of sampling trajectories leaves the difficulty of having to set up a sampling distribution. Combinatorial optimization, an optimization problem, takes discrete values (in other words, values that are not continuous), making it difficult to set up a probability distribution that returns the probability corresponding to a value when a certain value is input. This is because in a combinatorial optimization problem, if the value in the objective function changes even slightly, the result may also change significantly.

On the other hand, the learning device 100 (weight updating unit 60) of this exemplary embodiment derives the lower bound of the log-likelihood for maximum entropy inverse reinforcement learning, which is decomposed into Wasserstein distance and entropy regularization terms. The learning device 100 then updates the parameters of the reward function to maximize the lower bound of the derived log-likelihood. Thus, the indefiniteness in inverse reinforcement learning can be resolved, and since the sampling distribution does not need to be set, it can be applied to various mathematical optimization, especially combinatorial optimization.

For example, typical examples of combinatorial optimization problems include routing problems, scheduling problems, cut-and-pack problems, and assignment and matching problems. Specifically, the routing problem is, for example, the transportation routing problem or the traveling salesman problem, and the scheduling problem is, for example, the job store problem or the work schedule problem. The cut-and-pack problem is, for example, the knapsack problem or the bin packing problem, and the allocation and matching problem is, for example, the maximum matching problem or the generalized allocation problem.

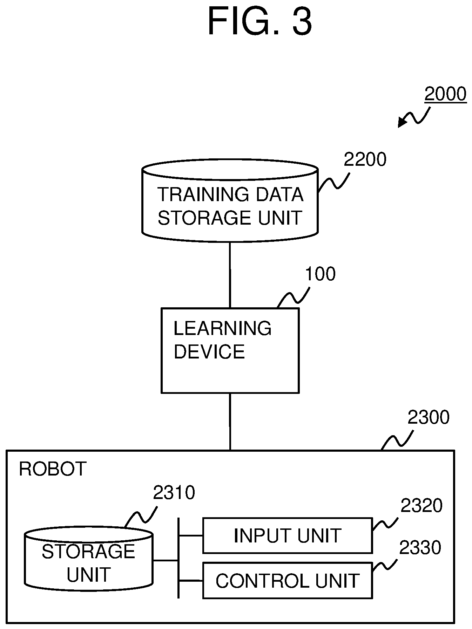

Next, a specific example of a robot control system using the learning device 100 of this exemplary embodiment will be described. FIG. 3 is a block diagram illustrating a configuration example of one embodiment of a robot control system. The robot control system 2000 illustrated in FIG. 3 includes a learning device 100, a training data storage unit 2200, and a robot 2300.

The learning device 100 illustrated in FIG. 3 is the same as the learning device 100 in the above exemplary embodiment. The learning device 100 stores the reward function created as a result of learning in the storage unit 2310 of the robot 2300 described below.

The training data storage unit 2200 stores training data used by the learning device 100 for learning. The training data storage unit 2200 may, for example, store decision-making history data of an expert.

The robot 2300 is a device that operates based on a reward function. The robot here is not limited to a device shaped to resemble a human or an animal, but also includes a device that performs automatic tasks (automatic operation, automatic control, etc.). The robot 2300 includes a storage unit 2310, an input unit 2320, and a control unit 2330.

The memory unit 2310 stores the reward function learned by the learning device 100.

The input unit 2320 accepts input of data indicating the state of the robot in operation.

The control unit 2330 determines actions to be performed by the robot 2300 based on the received (state-indicating) data and the reward function stored in the storage unit 2310. The method in which the control unit 2330 determines the control action based on the reward function is widely known, and a detailed explanation is omitted here. In this exemplary embodiment, a device such as the robot 2300, which performs automatic tasks, can be controlled based on a reward function that reflects the intention of an expert.

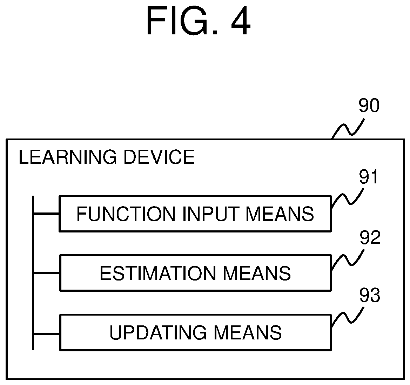

Next, an overview of the present invention will be described. FIG. 4 is a block diagram illustrating the outline of a learning device according to the present disclosure. The learning device 90 (e.g., learning device 100) according to the present disclosure includes a function input means 91 (e.g., mathematical optimization execution unit 50) which accepts input of a reward function whose feature is set to satisfy Lipschitz continuity condition, an estimation means 92 (e.g., mathematical optimization execution unit 50) which estimates a trajectory that minimizes Wasserstein distance, which represents distance between a probability distribution of a trajectory of an expert and a probability distribution of a trajectory determined based on a parameter of the reward function, and an updating means 93 (e.g., weight updating unit 60) which updates, based on the estimated trajectory, the parameter of the reward function to maximize the log-likelihood of Boltzmann distribution derived from a principle of a maximum entropy.

The updating means 93 derives, as a lower limit of the log-likelihood, an expression for subtracting, from the Wasserstein distance, an entropy regularization term defined by an expression for the maximum reward value for the parameter minus the average value of reward for the parameter, and updates the parameter of the reward function to maximize the derived lower limit of the log-likelihood.

Such a configuration allows inverse reinforcement learning to solve the problem of indefiniteness in inverse reinforcement learning while also being applicable to mathematical optimization problems such as combinatorial optimization.

The updating means 93 may set, to the entropy regularization term, an attenuation coefficient (e.g., $\beta_t$) that attenuates degree to which the portion (e.g., the expression in the second parenthesis of Equation 12) corresponding to the entropy regularization term (e.g., the expression in the second parenthesis of Equation 10) contributes to maximizing the lower limit of the log-likelihood as the process of updating the parameter is repeated, and updates the parameter of the reward function to maximize the set lower limit of log-likelihood.

On the other hand, the updating means 93 may set an attenuation coefficient (e.g., $\beta_t$) that attenuates degree to which the entropy regularization term contributes to maximizing the lower limit of the log-likelihood to the portion corresponding to the entropy regularization term, and, in the course of repeating the process of updating the parameter, change the attenuation coefficient to attenuate degree to which the portion corresponding to the entropy regularization term contributes to maximizing the lower limit of the log-likelihood (e.g., from $\beta_t = 1$ to $\beta_t = 0$, or from $\beta_t = 1$ to $\beta_t$ illustrated in Equation 13 above).

Specifically, the updating means 93 may change the attenuation coefficient when it is determined that the moving average of the log-likelihood has become constant (e.g., the change in the moving average is very small).

The updating means 93 may derive the lower bound for the log-likelihood based on an upper bound of a log sum exponential.

The function input means 91 may accept input of the reward function whose feature is set to be a linear function.

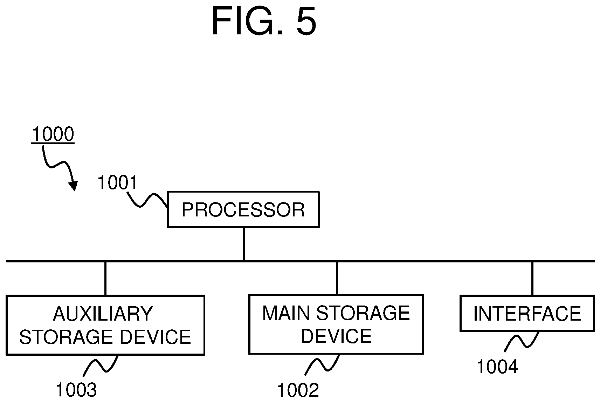

Fig. 5 is a schematic block diagram illustrating a configuration of a computer according to at least one exemplary embodiment. A computer 1000 includes a processor 1001, a main storage device 1002, an auxiliary storage device 1003, and an interface 1004.

The learning device 90 described above is implemented in the computer 1000. Then, the operation of each processing unit described above is stored in the auxiliary storage device 1003 in the form of a program (learning program). The processor 1001 reads the program from the auxiliary storage device 1003, develops the program in the main storage device 1002, and executes the above processing according to the program.

Note that, in at least one exemplary embodiment, the auxiliary storage device 1003 is an example of a non-transitory tangible medium. Other examples of the non-transitory tangible medium include a magnetic disk, a magneto-optical disk, a compact disc read-only memory (CD-ROM), a digital versatile disk (DVD)-ROM, a semiconductor memory, and the like connected via the interface 1004. Furthermore, in a case where the program is distributed to the computer 1000 via a communication line, the computer 1000 that has received the program may develop the program in the main storage device 1002 and execute the above processing.

Furthermore, the program may be for implementing some of the functions described above. In addition, the program may be a program that implements the above-described functions in combination with another program already stored in the auxiliary storage device 1003, a so-called difference file (difference program).

Although some or all of the above exemplary embodiments may also be described as in the following Supplementary notes, but not limited to the following.

(Supplementary note 1) A learning device comprising:

a function input means which accepts input of a reward function whose feature is set to satisfy Lipschitz continuity condition;

an estimation means which estimates a trajectory that minimizes Wasserstein distance, which represents distance between a probability distribution of a trajectory of an expert and a probability distribution of a trajectory determined based on a parameter of the reward function; and

an updating means which updates, based on the estimated trajectory, the parameter of the reward function to maximize the log-likelihood of Boltzmann distribution derived from a principle of a maximum entropy,

wherein the updating means derives, as a lower limit of the log-likelihood, an expression for subtracting, from the Wasserstein distance, an entropy regularization term defined by an expression for the maximum reward value for the parameter minus the average value of reward for the parameter, and updates the parameter of the reward function to maximize the derived lower limit of the log-likelihood.

(Supplementary note 2) The learning device according to Supplementary note 1, wherein the updating means sets, to the entropy regularization term, an attenuation coefficient that attenuates degree to which the portion corresponding to the entropy regularization term contributes to maximizing the lower limit of the log-likelihood as the process of updating the parameter is repeated, and updates the parameter of the reward function to maximize the set lower limit of log-likelihood.

(Supplementary note 3) The learning device according to Supplementary note 1, wherein the updating means sets an attenuation coefficient that attenuates degree to which the entropy regularization term contributes to maximizing the lower limit of the log-likelihood to the portion corresponding to the entropy regularization term, and, in the course of repeating the process of updating the parameter, changes the attenuation coefficient to attenuate degree to which the portion corresponding to the entropy regularization term contributes to maximizing the lower limit of the log-likelihood.

(Supplementary note 4) The learning device according to Supplementary note 3, wherein the updating means changes the attenuation coefficient when it is determined that the moving average of the log-likelihood has become constant.

(Supplementary note 5) The learning device according to any one of Supplementary notes 1 to 4, wherein the updating means derives the lower bound for the log-likelihood based on an upper bound of a log sum exponential.

(Supplementary note 6) The learning device according to any one of Supplementary notes 1 to 5, wherein the function input means accepts input of the reward function whose feature is set to be a linear function.

(Supplementary note 7) A learning method for a computer comprising:

accepting input of a reward function whose feature is set to satisfy Lipschitz continuity condition;
estimating a trajectory that minimizes Wasserstein distance, which represents distance between a probability distribution of a trajectory of an expert and a probability distribution of a trajectory determined based on a parameter of the reward function; and
updating, based on the estimated trajectory, the parameter of the reward function to maximize the log-likelihood of Boltzmann distribution derived from a principle of a maximum entropy,
wherein, when updating the parameter, the computer derives, as a lower limit of the log-likelihood, an expression for subtracting, from the Wasserstein distance, an entropy regularization term defined by an expression for the maximum reward value for the parameter minus the average value of reward for the parameter, and updates the parameter of the reward function to maximize the derived lower limit of the log-likelihood.

(Supplementary note 8) The learning method according to Supplementary note 7, wherein the computer sets, to the entropy regularization term, an attenuation coefficient that attenuates degree to which the portion corresponding to the entropy regularization term contributes to maximizing the lower limit of the log-likelihood as the process of updating the parameter is repeated, and updates the parameter of the reward function to maximize the set lower limit of log-likelihood.

(Supplementary note 9) The learning method according to Supplementary note 7, wherein the computer sets an attenuation coefficient that attenuates degree to which the entropy regularization term contributes to maximizing the lower limit of the log-likelihood to the portion corresponding to the entropy regularization term, and, in the course of repeating the process of updating the parameter, changes the attenuation coefficient to attenuate degree to which the portion corresponding to the entropy regularization term contributes to maximizing the lower limit of the log-likelihood.

(Supplementary note 10) A program storage medium which stores a learning program for causing a computer to execute:

function input processing to accept input of a reward function whose feature is set to satisfy Lipschitz continuity condition;
estimation input processing to estimate a trajectory that minimizes Wasserstein distance, which represents distance between a probability distribution of a trajectory of an expert and a probability distribution of a trajectory determined based on a parameter of the reward function; and
updating processing to update, based on the estimated trajectory, the parameter of the reward function to maximize the log-likelihood of Boltzmann distribution derived from a principle of a maximum entropy,
wherein in the updating processing, as a lower limit of the log-likelihood, an expression for subtracting, from the Wasserstein distance, an entropy regularization term defined by an expression for the maximum reward value for the parameter minus the average value of reward for the parameter is derived, and the parameter of the reward function to maximize the derived lower limit of the log-likelihood is updated.

(Supplementary note 11) The program storage medium according to Supplementary note 10, wherein in the updating processing, an attenuation coefficient that attenuates degree to which the portion corresponding to the entropy regularization term contributes to maximizing the lower limit of the log-likelihood as the process of updating the parameter is repeated is set to the entropy regularization term, and the parameter of the reward function is updated to maximize the set lower limit of log-likelihood.

(Supplementary note 12) The program storage medium according to Supplementary note 10, wherein in the updating processing, an attenuation coefficient that attenuates degree to which the entropy regularization term contributes to maximizing the lower limit of the log-likelihood is set to the portion corresponding to the entropy regularization term, and, in the course of repeating the process of updating the parameter, the attenuation coefficient is changed to attenuate degree to which the portion corresponding to the entropy regularization term contributes to maximizing the lower limit of the log-likelihood.

(Supplementary note 13) A learning program for causing a computer to execute:

function input processing to accept input of a reward function whose feature is set to satisfy Lipschitz continuity condition;

estimation input processing to estimate a trajectory that minimizes Wasserstein distance, which represents distance between a probability distribution of a trajectory of an expert and a probability distribution of a trajectory determined based on a parameter of the reward function; and

updating processing to update, based on the estimated trajectory, the parameter of the reward function to maximize the log-likelihood of Boltzmann distribution derived from a principle of a maximum entropy,

wherein in the updating processing, as a lower limit of the log-likelihood, an expression for subtracting, from the Wasserstein distance, an entropy regularization term defined by an expression for the maximum reward value for the parameter minus the average value of reward for the parameter is derived, and the parameter of the reward function to maximize the derived lower limit of the log-likelihood is updated.

(Supplementary note 14) The learning program according to Supplementary note 13, wherein in the updating processing, an attenuation coefficient that attenuates degree to which the portion corresponding to the entropy regularization term contributes to maximizing the lower limit of the log-likelihood as the process of updating the parameter is repeated is set to the entropy regularization term, and the parameter of the reward function is updated to maximize the set lower limit of log-likelihood.

(Supplementary note 15) The learning program according to Supplementary note 13, wherein in the updating processing, an attenuation coefficient that attenuates degree to which the entropy regularization term contributes to maximizing the lower limit of the log-likelihood is set to the portion corresponding to the entropy regularization term, and, in the course of repeating the process of updating the parameter, the attenuation coefficient is changed to attenuate degree to which the portion corresponding to the entropy regularization term contributes to maximizing the lower limit of the log-likelihood.

**Reference Signs List**

10 Storage unit
20 Input unit
30 Feature setting unit
40 Weight initial value setting unit
50 Mathematical optimization execution unit
60 Weight updating unit
70 Convergence decision unit
100 Learning device

**Claims**

1. A learning device comprising:

a function input means which accepts input of a reward function whose feature is set to satisfy Lipschitz continuity condition;

an estimation means which estimates a trajectory that minimizes Wasserstein distance, which represents distance between a probability distribution of a trajectory of an expert and a probability distribution of a trajectory determined based on a parameter of the reward function; and

an updating means which updates, based on the estimated trajectory, the parameter of the reward function to maximize the log-likelihood of Boltzmann distribution derived from a principle of a maximum entropy,

wherein the updating means derives, as a lower limit of the log-likelihood, an expression for subtracting, from the Wasserstein distance, an entropy regularization term defined by an expression for the maximum reward value for the parameter minus the average value of reward for the parameter, and updates the parameter of the reward function to maximize the derived lower limit of the log-likelihood.

2. The learning device according to claim 1, wherein

the updating means sets, to the entropy regularization term, an attenuation coefficient that attenuates degree to which the portion corresponding to the entropy regularization term contributes to maximizing the lower limit of the log-likelihood as the process of updating the parameter is repeated, and updates the parameter of the reward function to maximize the set lower limit of log-likelihood.

3. The learning device according to claim 1, wherein
the updating means sets an attenuation coefficient that attenuates degree to which the entropy regularization term contributes to maximizing the lower limit of the log-likelihood to the portion corresponding to the entropy regularization term, and, in the course of repeating the process of updating the parameter, changes the attenuation coefficient to attenuate degree to which the portion corresponding to the entropy regularization term contributes to maximizing the lower limit of the log-likelihood.

4. The learning device according to claim 3, wherein
the updating means changes the attenuation coefficient when it is determined that the moving average of the log-likelihood has become constant.

5. The learning device according to any one of claims 1 to 4, wherein
the updating means derives the lower bound for the log-likelihood based on an upper bound of a log sum exponential.

6. The learning device according to any one of claims 1 to 5, wherein
the function input means accepts input of the reward function whose feature is set to be a linear function.

7. A learning method for a computer comprising:

accepting input of a reward function whose feature is set to satisfy Lipschitz continuity condition;
estimating a trajectory that minimizes Wasserstein distance, which represents distance between a probability distribution of a trajectory of an expert and a probability distribution of a trajectory determined based on a parameter of the reward function; and
updating, based on the estimated trajectory, the parameter of the reward function to maximize the log-likelihood of Boltzmann distribution derived from a principle of a maximum entropy,
wherein, when updating the parameter, the computer derives, as a lower limit of the log-likelihood, an expression for subtracting, from the Wasserstein distance, an entropy regularization term defined by an expression for the maximum reward value for the parameter minus the average value of reward for the parameter, and updates the parameter of the reward function to maximize the derived lower limit of the log-likelihood.

8. The learning method according to claim 7, wherein
the computer sets, to the entropy regularization term, an attenuation coefficient that attenuates degree to which the portion corresponding to the entropy regularization term contributes to maximizing the lower limit of the log-likelihood as the process of updating the parameter is repeated, and updates the parameter of the reward function to maximize the set lower limit of log-likelihood.

9. The learning method according to claim 7, wherein
the computer sets an attenuation coefficient that attenuates degree to which the entropy regularization term contributes to maximizing the lower limit of the log-likelihood to the portion corresponding to the entropy regularization term, and, in the course of repeating the process of updating the parameter, changes the attenuation coefficient to attenuate degree to which the portion corresponding to the entropy regularization term contributes to maximizing the lower limit of the log-likelihood.

10. A program storage medium which stores a learning program for causing a computer to execute:

function input processing to accept input of a reward function whose feature is set to satisfy Lipschitz continuity condition;
estimation input processing to estimate a trajectory that minimizes Wasserstein distance, which represents distance between a probability distribution of a trajectory of an expert and a probability distribution of a trajectory determined based on a parameter of the reward function; and
updating processing to update, based on the estimated trajectory, the parameter of the reward function to maximize the log-likelihood of Boltzmann distribution derived from a principle of a maximum entropy,
wherein in the updating processing, as a lower limit of the log-likelihood, an expression for subtracting, from the Wasserstein distance, an entropy regularization term defined by an expression for the maximum reward value for the parameter minus the average value of reward for the parameter is derived, and the parameter of the reward function to maximize the derived lower limit of the log-likelihood is updated.

11. The program storage medium according to claim 10, wherein
in the updating processing, an attenuation coefficient that attenuates degree to which the portion corresponding to the entropy regularization term contributes to maximizing the lower limit of the log-likelihood as the process of updating the parameter is repeated is set to the entropy regularization term, and the parameter of the reward function is updated to maximize the set lower limit of log-likelihood.

12. The program storage medium according to claim 10, wherein
in the updating processing, an attenuation coefficient that attenuates degree to which the entropy regularization term contributes to maximizing the lower limit of the log-likelihood is set to the portion corresponding to the entropy regularization term, and, in the course of repeating the process of updating the parameter, the attenuation coefficient is changed to attenuate degree to which the portion corresponding to the entropy regularization term contributes to maximizing the lower limit of the log-likelihood.

# FIG. 1

LEARNING DEVICE — 100

STORAGE UNIT — 10

INPUT UNIT — 20

FEATURE SETTING UNIT — 30

WEIGHT INITIAL VALUE SETTING UNIT — 40

MATHEMATICAL OPTIMIZATION EXECUTION UNIT — 50

WEIGHT UPDATING UNIT — 60

CONVERGENCE DECISION UNIT — 70

OUTPUT UNIT — 80

# FIG. 2

START

ACCEPT INPUT OF EXPERT DATA — S11

SET FEATURE OF REWARD FUNCTION TO
SATISFY LIPSCHITZ CONTINUITY CONDITION — S12

INITIALIZE WEIGHT (PARAMETER) OF
REWARD FUNCTION — S13

INPUT OF REWARD FUNCTION — S14

EXECUTE MATHEMATICAL OPTIMIZATION TO
MINIMIZE WASSERSTEIN DISTANCE — S15

UPDATE PARAMETER OF REWARD FUNCTION
SO AS TO MAXIMIZE LOG-LIKELIHOOD OF
BOLTZMANN DISTRIBUTION — S16

IS LOWER BOUND
OF LOG-LIKELIHOOD
CONVERGED? — S17
NO / YES

OUTPUT REWARD FUNCTION — S18

END

# FIG. 3

# FIG. 4

LEARNING DEVICE 90

FUNCTION INPUT MEANS 91

ESTIMATION MEANS 92

UPDATING MEANS 93

# FIG. 5

## INTERNATIONAL SEARCH REPORT

International application No.

**PCT/JP2021/016630**

### A.    CLASSIFICATION OF SUBJECT MATTER

*G06N 20/00*(2019.01)i
FI:   G06N20/00

According to International Patent Classification (IPC) or to both national classification and IPC

### B.    FIELDS SEARCHED

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | XIAO, Huang et al. Wasserstein Adversarial Imitation Learning, [online]. arXiv. 19 June 2019, pp. 1-18, [retrieval date 24 June 2021], Internet: <URL:https://arxiv.org/pdf/1906.08113.pdf><br>entire text | 1-12 |
| A | GANGWANI, Tanmay et al. STATE-ONLY IMITATION WITH TRANSITION DYNAMICS MISMATCH, [online]. arXiv. 27 February 2020, pp. 1-17, [retrieval date 24 June 2021], Internet: <URL:https://arxiv.org/pdf/2002.11879.pdf><br>entire text | 1-12 |
| A | ZHANG, Ming et al. Wasserstein Distance guided Adversarial Imitation Learning with Reward Shape Exploration, [online]. arXiv. 08 December 2020, [retrieval date 24 June 2021], Internet: <URL:https://arxiv.org/pdf/2006.03503.pdf><br>entire text | 1-12 |

☐ Further documents are listed in the continuation of Box C.          ☐ See patent family annex.

| | |
|---|---|
| *    Special categories of cited documents:<br>"A"  document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"  document referring to an oral disclosure, use, exhibition or other means<br>"P"   document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br><br>**24 June 2021** | Date of mailing of the international search report<br><br>**06 July 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. D. ZIEBART ; A. MAAS ; J. A. BAGNELL ; A. K. DEY.** Maximum entropy inverse reinforcement learning. *AAAI, AAAI '08,* 2008

- **CHELSEA FINN ; SERGEY LEVINE ; PIETER AB-BEEL.** Guided Cost Learning: Deep Inverse Optimal Control via Policy Optimization. *Proceedings of The 33rd International Conference on Machine Learning, PMLR,* 2016, vol. 48, 49-58